# EUROPEAN PATENT APPLICATION

(11) **EP 2 570 319 A1**
(43) Date of publication of application: **20.03.2013**
(21) Application number: 11780702.4
(22) Date of filing: 13.05.2011
(51) Int. Cl.: B60W 10/26, B60K 6/445, B60W 10/06, B60W 10/08, B60W 20/00, F02D 29/02, F02D 45/00

(54) **HYBRID VEHICLE**

(30) Priority: 13.05.2010 JP 2010111180
(71) Applicant: Hitachi Automotive Systems, Ltd., Hitachinaka-shi Ibaraki 312-8503 (JP)
(72) Inventor: FUJII, Yoshihisa, Hitachinaka-shi Ibaraki 312-8503 (JP)
(74) Representative: MERH-IP Matias Erny Reichl Hoffmann
(86) International application number: PCT/JP2011/061013
(87) International publication number: WO 2011/142446

(57) **Abstract**

A hybrid vehicle provided consumes deteriorated fuel efficiently and rapidly while reducing effects on the running performance to the minimum. The hybrid vehicle includes an engine 1, a generator 2 driven by the engine 1, a battery 4 charged by both a power source or a power generating device located outside the vehicle 20 and the generator 2, a motor 12 which receives power supply from the battery 4, and a vehicle controller 5 which controls the engine 1, the generator 2, the motor 12. The vehicle controller 5 has deterioration detecting means which detects or estimates a deterioration level of fuel used by the engine 1, state of charge detecting means which detects a state of charge SOC, and target value setting means which sets an internal charge target value TS for charge by the generator 2 in correspondence with the state of charge SOC. The target value setting means sets the target value TS to a normal value TS1 at the time of fuel non-deterioration when the deterioration level is lower than a predetermined value, and changes the target value TS to a deterioration time value TS2 higher than the normal value TS1 at the time of fuel deterioration when the deterioration level is the predetermined value or higher.

## Description

### Technical Field

The present invention relates to a plug-in hybrid vehicle which has an engine (internal combustion engine) and an electric motor (motor generator) as a running drive source, and a battery charged by both a power source or a power generating device disposed outside the vehicle and a generator driven by the engine. The invention relates more particularly to a hybrid vehicle capable of executing appropriate steps when fuel used by the engine deteriorates (to a level higher than a predetermined deterioration level).

### Background Art

Recently, various types of hybrid vehicles provided with an engine and an electric motor as a running drive source have been proposed or put to practical use.

These types of hybrid vehicles (HV) can reduce the load on the engine more greatly than a conventional vehicle provided with only an engine, and thus can decrease fuel consumption. In this case, fuel stored in a fuel tank of the vehicle easily deteriorates.

Moreover, in the case of a plug-in hybrid (PHV) vehicle charged by a power source or a power generating device disposed outside the vehicle, the frequency of EV running which practically uses only the motor as the running drive source increases when the battery on the vehicle is constantly charged by the outside power source (such as domestic 100V power source). In this case, it is estimated that the operating time and frequency of the engine extremely decrease, in which condition the possibility of fuel deterioration considerably rises.

When fuel deteriorates, the following adverse effects arise.

● Startability and combustibility deteriorate.

● Fuel gums and clogs a fuel filter and components of a fuel piping and a fuel injection valve.

● organic acid produced as a product of fuel deterioration causes metal corrosion.

For eliminating the problem of fuel deterioration, PTL 1 identified below discloses a method which stores hysteresis of the supply timing and supply amount every time fuel is supplied to the fuel tank, and calculates the deterioration level of the fuel contained in the fuel tank based on the hysteresis of the stored supply timing and supply amount. At the time of fuel deterioration when the fuel deterioration level is a predetermined value or higher, the request load on the engine is changed from a first request load (such as a request load when only the motor is used as the running drive source) to a second request load higher than the first request load for promotion of the use of the deteriorated fuel.

In addition, PTL 2 identified below discloses a method which requires the driver or passenger to select running energy obtained by charge from the outside of the vehicle or running energy obtained from the engine at the time of fuel deterioration in response to a request for charge of the battery on the vehicle from the source outside the vehicle.

### Citation List

### Patent Literature

PTL 1: JP-A-2009-255680
PTL 2: JP-A-2008-302772

### Summary of Invention

### Technical Problem

According to the steps disclosed in PTL 1, however, the hybrid vehicle originally drives the engine in a high-load range for reduction of pumping loss, and therefore cannot greatly raise fuel consumption by further increase of the load. Accordingly, these steps can produce only a limited effect for promoting the use of the deteriorated fuel.

According to the method employed by PTL 2, fuel is consumed by cancelling charge and increasing the proportion of use of the engine for the next running. As a result, fuel can be consumed with high efficiency. However, there is a case when the vehicle is only used after several months from the last running depending on the use frequency of the vehicle, in which condition deterioration of fuel further develops. Moreover, when charge is cancelled, use of the motor for acceleration is not allowed depending on the state of charge of the battery (SOC). In this case, running by using only the engine is performed with a possibility of torque insufficiency. Furthermore, the driver or the passenger is required to determine whether charge is cancelled or not at the time of fuel deterioration, which task is troublesome for the driver or the passenger.

The invention has been developed to solve aforementioned problems. An object of the invention is to provide a hybrid vehicle capable of consuming deteriorated fuel with high efficiency and rapidity while reducing influences on the running performance to the minimum.

### Solution to Problem

A hybrid vehicle capable of achieving the foregoing object according to the invention basically includes: an engine functioning as a running drive source; a generator driven by the engine; a battery charged by both a power source or a power generating device located outside the vehicle and the generator; a motor functioning as a running drive source and receiving power supply from the battery; and a vehicle controller which controls the engine, the generator, the motor and others. The vehicle controller has deterioration detecting means which detects or estimates a deterioration level of fuel used by the engine, state of charge detecting means which detects a state of charge of the battery, and internal charge target value setting means which sets an internal charge target value for charge by the generator or others in correspondence with the state of charge. The internal charge target value setting means sets the internal charge target value to a normal value at the time of fuel non-deterioration when the deterioration level is lower than a predetermined value, and changes the internal charge target value to a deterioration time value higher than the normal value at the time of fuel deterioration when the deterioration level is the predetermined value or higher.

In a more preferable mode, the internal charge target value setting means further changes the internal charge target value from the deterioration time value to the normal value when the state of charge exceeds the deterioration time value at the time of the fuel deterioration, and then changes the internal charge target value from the normal value to the deterioration time value when the state of charge decreases to a value lower than the normal value, thereafter repeating the changes of the target value until the deterioration condition of fuel is cancelled.

### Advantageous effects of Invention

The hybrid vehicle according to the invention changes the internal charge target value of the state of charge to the deterioration time value higher than the normal value immediately after determination of fuel deterioration. In this case, the operating frequency and the operating time of the engine considerably increase higher than in a structure which raises the request load as in the related art, for example. Thus, deteriorated fuel can be efficiently and rapidly consumed.

Moreover, a constant level (the target value or higher) of the state of charge is maintained. In this case, the possibility of torque insufficiency and the like can be eliminated in the condition of the necessity for power of the motor for acceleration or other purposes. Accordingly, the use of deteriorated fuel can be effectively promoted while reducing the effects on the running performance to the minimum. Brief Description of Drawings

[FIG. 1] FIG. 1 illustrates a general system structure of a hybrid vehicle according to an embodiment of the invention.
[FIG. 2] FIG. 2 is a flowchart showing an example of processing procedures performed for setting an internal charge target value and a running mode for the hybrid vehicle illustrated in FIG. 1.
[FIG. 3] FIG. 3 is a flowchart showing an example of processes performed for charge of the hybrid vehicle illustrated in FIG. 1 from the outside.
[FIG. 4] FIG. 4 is a figure for explaining an example of a running pattern and a change of a state of charge SOC at the time of fuel non-deterioration when the processes shown in FIGS. 2 and 3 are performed.
[FIG. 5] FIG. 5 is a figure for explaining an example of a running pattern and a change of the state of charge SOC at the time of fuel deterioration when the processes shown in FIGS. 2 and 3 are performed.
[FIG. 6] FIG. 6 is a flowchart showing another example of processing procedures performed for setting the internal charge target value and the running mode for the hybrid vehicle illustrated in FIG. 1.
[FIG. 7] FIG. 7 is a figure for explaining an example of a running pattern and a change of the state of charge SOC at the time of fuel deterioration when the processes shown in FIG. 6 are performed.

### Description of Embodiments

An embodiment according to the invention is hereinafter described with reference to the drawings.

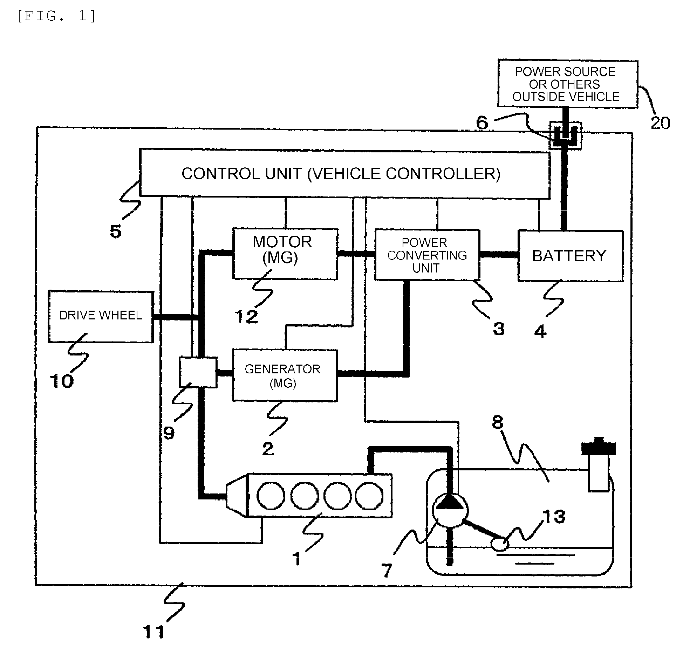

FIG. 1 illustrates a general system structure of a hybrid vehicle according to an embodiment of the invention.

A hybrid vehicle 11 shown in FIG. 1 basically includes an engine (internal combustion engine) 1, a generator 2 (motor generator [first MG] functioning as a starter as well) driven by the engine 1, a battery 4 which receives alternating current power from the generator 2 for charge via a power converting unit 3 (after the alternating current power is converted into direct current power), a motor 12 (motor generator [second MG] having a power generating function as well) which receives power supply from the battery 4 via the power converting unit 3, a power split mechanism 9 constituted by a planetary gear mechanism or the like and connecting with the engine 1, the generator 2, and the rotation shaft (drive shaft) of the motor 12, and a control unit 5 containing a microcomputer and functioning as the center of a vehicle controller for controlling the engine 1, the generator 2, the motor 12, the power split mechanism 9 and others.

The engine 1 and the motor 12 are used as a running drive source for rotating a wheel (drive wheel) 10. The engine 1 receives supply of fuel contained in a fuel tank 8 via a fuel supply system constituted by a pump 7 and others, and generates a driving force by combustion of a mixture of the fuel and air. The motor 12 generates a driving force by receiving power supply from the battery 4, and generates (regenerates) power by using rotation of the wheel 10 at the time of speed reduction or braking of the vehicle 11 to supply the generated electric energy via the power converting unit 3 to the battery 4 for storage therein.

The power split mechanism 9 divides the power of the engine 1 into power for running (drive wheel 10) and power for generator drive (generator 2), and transmits the powers of the engine 1 and the motor 12 to the wheel 10 at an arbitrary distribution ratio.

The battery 4 is constituted by a dischargeable battery such as a nickel-metal hydride battery and a lithium ion battery. The battery 4 can be charged not only by the generator 2 (first MG) and the motor 12 (second MG) but also by a power source (such as a domestic 100V power source), a power generating device or others 20 disposed outside the vehicle and connected with the battery 4 via an external charger connector 6. The battery 4 is provided with a sensor for detecting voltage and input/output current of the battery 4, for example, so that the control unit 5 can calculate the state of charge (SOC) of the battery 4 based on a signal received from the sensor.

On the other hand, a float-type level gauge 13 is provided within the fuel tank 8. The control unit 5 stores hysteresis of the fuel remaining amount (fuel supply amount), the fuel supply timing and others in a self-contained memory based on a signal received from the level gauge 13, and calculates (estimates) the deterioration level of the fuel in the fuel tank based on the stored hysteresis of the supply timing and the supply amount. When the fuel deterioration level is lower than a predetermined value, it is determined that the fuel is not deteriorated. When the fuel deterioration level is the predetermined value or higher, it is determined that the fuel is deteriorated.

The control unit 5 receives input of the vehicle speed, the degree of press of the brake pedal, the degree of press of the accelerator pedal, the shift position, and other information as well as the above information.

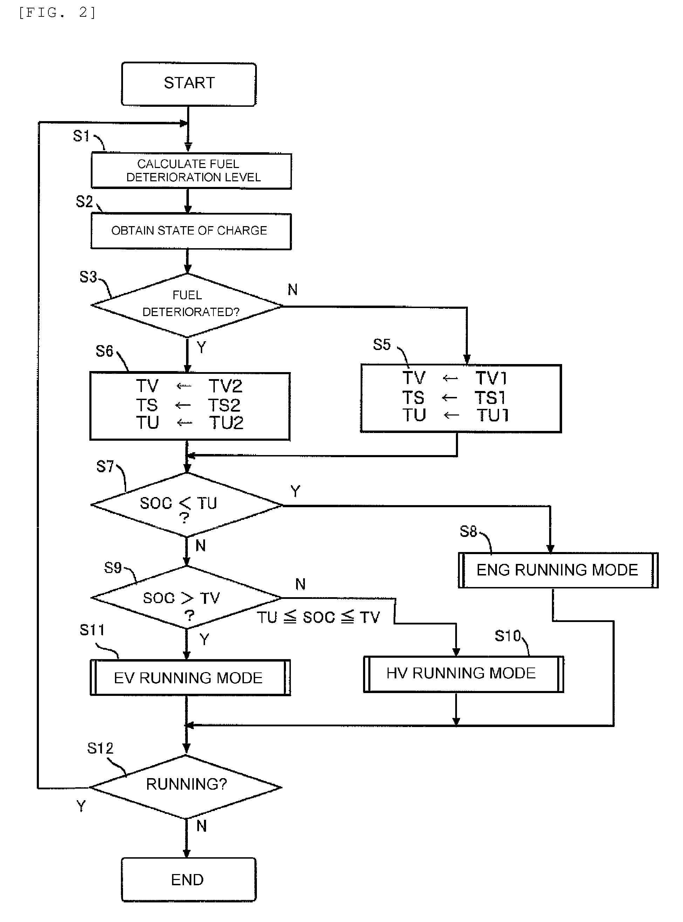

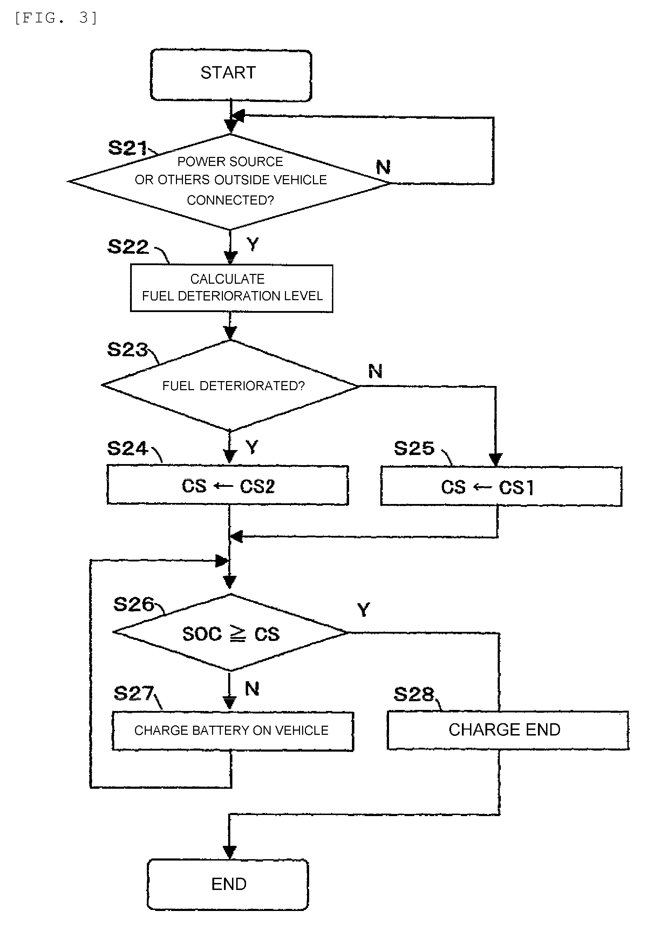

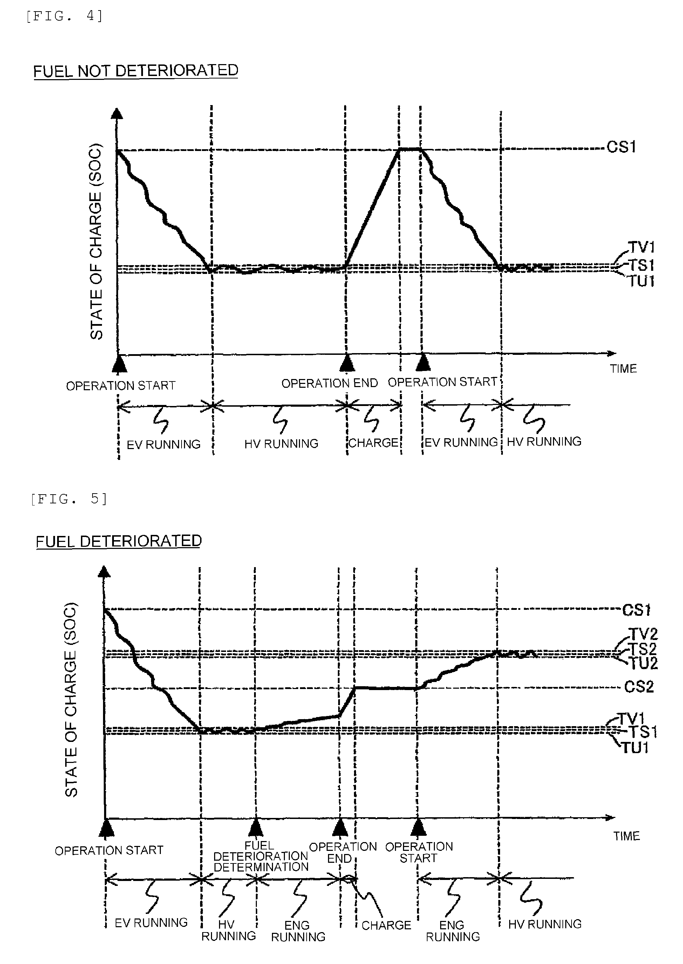

An example of the procedures for the vehicle control performed by the control unit 5 are now explained with reference to flowcharts in FIGS. 2 and 3 and time charts in FIGS. 4 and 5.

Basically, the control unit 5 calculates the deterioration level of fuel during running based on the input signal and information noted above (step S1 in FIG. 2) and obtains the state of charge SOC (step S2), thereby determining a target value TS (target lower limit value TU and target upper limit value TV) for internal charge by the generator 2 and the motor 12 in correspondence with the state of charge. In this example, the target lower limit value TU is calculated as (target value TS - α), while the target upper limit value TV is calculated as (target value TS + α). The range from the target lower limit value TU to the target upper limit value TV corresponds to a dead zone (width: 2α).

The control unit 5 selects an EV running mode (mode not using the engine 1 substantially for the whole drive range) which substantially uses only the motor 12 for the running drive source until the state of charge SOC decreases from full charge to the target lower limit value TU (steps S7, S9, and S11). After the state of charge SOC becomes lower than the target lower limit value TU, the control unit 5 selects an ENG running mode (steps S7 and S8) which continuously uses the engine 1 for the running drive source, and an HV running mode (steps S7, S9, and S10) which intermittently uses the engine 1 and also uses the motor 12 for the running drive source, so that the state of charge SOC can fall approximately within the range from the target lower limit value TU to the target upper limit value TV (dead zone).

At the time of fuel deterioration, the control unit 5 executes the following processes so as to consume deteriorated fuel with high efficiency and rapidity while reducing effects on the running performance to the minimum.

When fuel is not deteriorated with the deterioration level lower than the predetermined value, the target value TS (target lower limit value TU and target upper limit value TV) is set to a normal value TS1 (normal lower limit value TU1 and normal upper limit value TV1) (steps S3 and S5). On the other hand, when fuel is deteriorated with the deterioration level equal to or higher than the predetermined value, the target value TS (target lower limit value TU and target upper limit value TV) is changed to a deterioration time value TS2 (deterioration time lower limit value TU2 and deterioration time upper limit value TV2) higher than the normal value TS1 (normal lower limit value TU1 and normal upper limit value TV1)(steps S3 and S6).

Moreover, the control unit 5 determines an external charge upper limit value CS referred to when the battery 4 is charged by the power source or others outside the vehicle 20 via the external charger connector 6. More specifically, when fuel is not deteriorated, the external charge upper limit value CS is set to a normal upper limit value CS1 (full charge value in this example) (steps S21, S22, S23, and S25 in FIG. 3). At the time of fuel deterioration, the external charge upper limit value CS is set to a determination time upper limit value CS2 lower than the normal upper limit value CS1 (steps S23 and S24) . When the state of charge SOC is equal to or lower than the external charge upper limit value CS (CS1 or CS2), the battery 4 is charged (steps S26 and S27). When the state of charge SOC exceeds the external charge upper limit value CS (CS1 or CS2), charge for the battery 4 ends (step S28).

At the time of fuel deterioration, it is preferable that the state of charge SOC after charge of the battery 4 from the outside of the vehicle is the lowest possible charge so as to increase the operating time and frequency of the engine 11 in the subsequent running. However, when the state of charge SOC is almost run out under the condition of the necessity for sufficient torque for acceleration, the simultaneous use of both the engine 11 and the motor 12 is not allowed, wherefore only the power of the engine 11 is used for running. In this condition, adverse effects such as slow acceleration may be imposed on the running performance. For avoiding this problem, the external charge upper limit value CS at the time of fuel deterioration is set to a value decreased lower than the upper limit value CS2 for fuel non-deterioration, but a value determined as the deterioration time upper limit value CS so as to reduce the adverse effects on the running performance to the minimum. The deterioration time upper limit value CS2 is a small amount of charge only sufficient for assisting acceleration approximately five times at the subsequent start. In this case, the running time in the ENG running mode increases at the subsequent drive restart. As a result, the operating time and frequency of the engine increase, promoting the use of deteriorated fuel.

Moreover, the hybrid vehicle 11 according to this embodiment can supply surplus power to a battery, power equipment or the like disposed outside the vehicle when the state of charge SOC excesses the deterioration time value CS2 during the fuel deterioration.

Explained below are an example of a running pattern and a change of the state of charge SOC under the vehicle control performed by the control unit 5 in the manner described above.

The explanation herein initially touches upon the example of the running pattern and the change of the state of charge SOC at the time of fuel non-deterioration with reference to FIG. 4, and then discusses the example of the running pattern and the change of the state of charge SOC at the time of fuel deterioration with reference to FIG. 5. In FIGS. 4 and 5, the vertical axis represents the state of charge SOC, while the horizontal axis represents time. In either of the cases, the battery 4 is completely charged at the initial start of operation, and the state of charge SOC is set to the normal upper limit value CS1 for external charge.

At the time of fuel non-deterioration, the EV running mode (mode not using the engine 1 substantially for the whole operation range) which practically uses only the motor 12 for the running drive source until the state of charge SOC reaches the normal lower limit value TU1 for internal charge from the full charge (CS1) after the start of operation. As a result, the state of charge SOC decreases. In the EV running mode, fuel is scarcely consumed.

After the state of charge SOC reaches a value lower than the normal lower limit value TU1, the ENG running mode which continuously uses the engine 1 for the running drive source is selected so that the state of charge SOC can fall substantially within the range from the normal lower limit value TU1 to the normal upper limit value TV1 (dead zone). As a result, the generator 2 is actuated by the engine 1 to increase the state of charge SOC, whereafter the state of charge SOC exceeds the normal upper limit value TV1 after an elapse of time. In this condition, the running mode is changed to the EV running mode. Thereafter, the ENG running mode and the EV running mode are alternately repeated until the battery 4 is charged by the power source or others outside the vehicle 20. In other words, the HV running mode which intermittently uses the engine 1 and also uses the motor 12 for the running drive source is selected after the drop of the state of charge SOC to a value lower than the normal lower limit value TU1 until the end of operation. As a consequence, the state of charge SOC falls approximately in the range from the normal lower limit value TU1 to the normal upper limit value TV1 (dead zone).

After the end of operation, the battery 4 is completely charged (to the normal upper limit value CS1) by the power source or others outside the vehicle 20. During the period of fuel non-deterioration, this pattern is repeated.

On the other hand, in the case of the running pattern shown in FIG. 5, the same steps as those executed during fuel non-deterioration as shown in FIG. 4 are performed after the initial start of operation until the time of determination that the fuel is deteriorated. When fuel deterioration is determined, the target value TS is changed to the deterioration time value TS2 higher than the normal value TS1 immediately after the determination. In response to this change of the internal charge target value TS, the running mode is changed from the HV running mode to the ENG running mode immediately after the determination of fuel deterioration. As a result, the deteriorated fuel is considerably consumed, and the generator 2 is continuously actuated by the engine 1. Accordingly, the state of charge SOC gradually rises to come close to the deterioration time lower limit value TU2.

According to this example, the operation ends before the state of charge SOC reaches the deterioration time lower limit value TU2, whereafter the battery 4 is charged by the power source or others outside the vehicle 20. In this case, the external charge upper limit value CS at the time of fuel deterioration is changed to the deterioration time upper limit value CS2 lower than the normal upper limit value CS1. Thus, the state of charge SOC is raised only to the deterioration time upper limit value CS2 lower than the internal charge deterioration time value TS2. Accordingly, at the time of the subsequent start of operation, the ENG running mode is immediately selected. As a consequence, fuel is considerably consumed, and the state of charge SOC is gradually raised to reach the internal charge deterioration time value TS2 after an elapse of time.

After the state of charge SOC reaches the deterioration time value TS2 by this method, the HV running mode is selected so that the state of charge SOC falls approximately within the range from the deterioration time lower limit value TU2 to the deterioration time upper limit value TV2 (dead zone).

According to this embodiment, therefore, the target value TS of the state of charge SOC is changed to the deterioration time value TS2 higher than the normal value TS1 immediately after the determination of fuel deterioration. Along with this change, the running mode is immediately changed from the HV running mode or the EV running mode to the ENG running mode. Accordingly, the operating frequency and the operating time of the engine 11 increase higher than in the structure which raises the request load or raises the operating frequency of the engine in the subsequent running as in the related art, wherefore rapid consumption of the deteriorated fuel can be promoted.

According to this embodiment, a constant level of the state of charge SOC (the normal value TS1 or higher) is maintained. In this case, the possibility of torque insufficiency or the like is eliminated when power of the motor 12 is required at the time of acceleration or for other purposes. Accordingly, the use of the deteriorated fuel can be effectively promoted while reducing adverse effects on the running performance to the minimum.

According to this embodiment, the HV running mode is continued after the state of charge SOC reaches the deterioration time value TS2. However, the following control may be carried out instead of the control discussed above.

According to the alternative control, the internal charge target value TS is changed from the deterioration time value TS2 to the normal value TS1 when the state of charge SOC exceeds the deterioration time value TS2. When the state of charge SOC decreases to a value lower than the normal value TS1, the target value TS is changed from the normal value TS1 to the deterioration time value TS2. Thereafter, these changes of the target value (TS2→TS1, TS1→TS2) may be repeated until the deterioration condition of fuel is cancelled (the deterioration level becomes lower than the predetermined value).

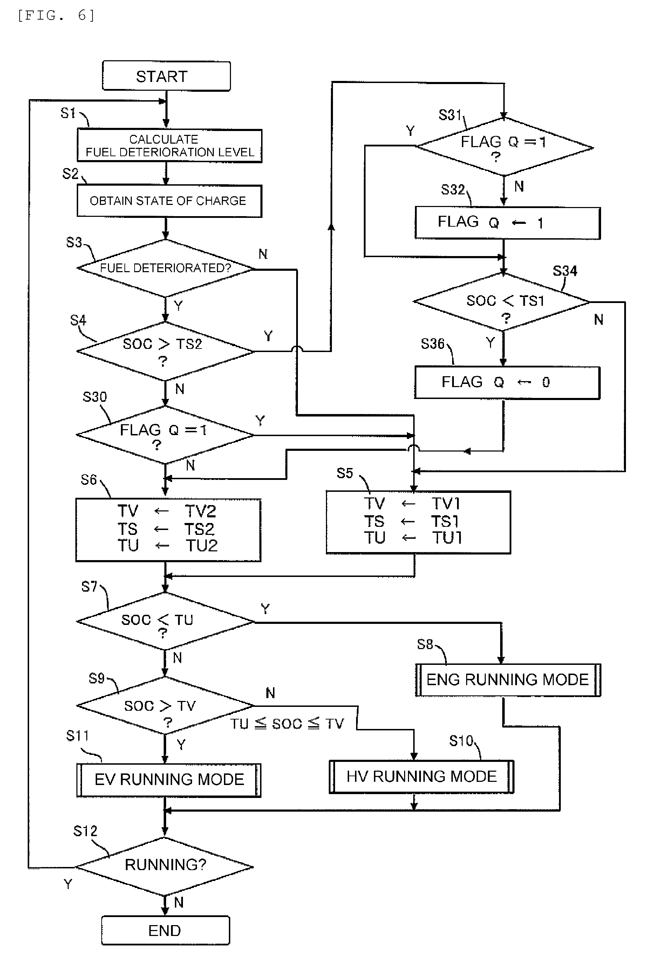

More specifically, as in a flowchart shown in FIG. 6 (which adds fuel deterioration time target value exceeding processes shown in steps S4, S30, S31, S32, S34, and S36 to the flowchart shown in FIG. 2 referred to above), it is determined whether the state of charge SOC exceeds the deterioration time value TS2 (SOC>TS2) in step S4. When not SOC>TS2, it is determined whether a deterioration time target value exceeding flag Q is 1 (set) in step S30. When the flag Q is not 1, the flow goes to step S6. When the flag Q is 1, the flow goes to step S5.

When SOC>TS2 is determined in step S4, the flow proceeds to step S31 to determine whether the deterioration time target value exceeding flag Q is 1 (set). When the flag Q is not 1, the deterioration time target value exceeding flag Q is set to 1 in step S32, whereafter the flow goes to step S34. When the flag Q is 1, the flow directly goes to step S34.

In step 34, it is determined whether the state of charge SOC is lower than the normal value TS1 (SOC<TS1). When it is determined that the condition is not SOC<TS1, the flow proceeds to step S5 to set the target value TS to the normal value TS1. When it is determined that the condition is SOC<TS1 in step 34, the flag Q is set to 0 in step S36, whereafter the flow goes to step S6 to change the target value TS to the deterioration time value TS2.

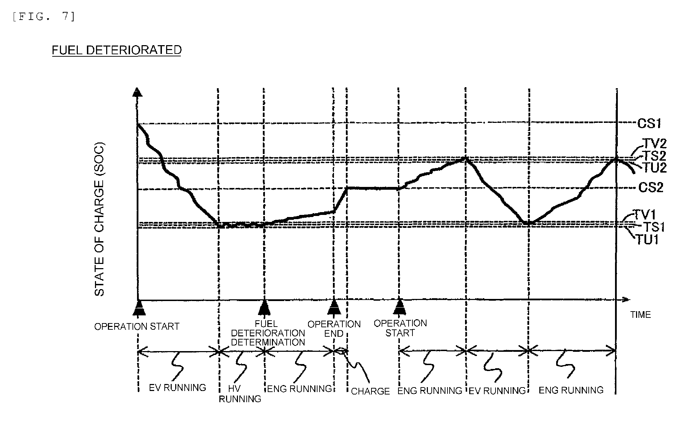

When the state of charge SOC reaches the deterioration time value TS2 as shown in FIG. 7 (the same as the time chart in FIG. 5 before the state of charge SOC reaches the deterioration time value TS2) by changing the target value in this manner (TS2→TS1, TS1→TS2), the target value TS is changed from the deterioration time value TS2 to the normal value TS1. Along with this change of the target value TS (TS2→TS1), the running mode is changed from the ENG running mode to the EV running mode immediately after the state of charge SOC reaches the deterioration time value TS2. Thereafter, the state of charge SOC decreases in the EV running mode, reaching a value lower than the normal value TS1 after an elapse of time. At this time, the target value TS is changed from the normal value TS1 to the deterioration time value TS2. Accordingly, when the state of charge SOC becomes lower than the normal value TS1, the running mode is immediately changed from the EV running mode to the ENG running mode. Thereafter, the above changes of the target value (TS2→TS1, TS1→TS2) are repeated until the deterioration condition of fuel is cancelled (the deterioration level becomes lower than the predetermined value).

As discussed above, the target value TS of the state of charge SOC is changed to the deterioration time value TS2 higher than the normal value TS1 immediately after the determination of fuel deterioration. In response to this change, the running mode is immediately changed from the HV running mode or the EV running mode to the ENG running mode. When the state of charge SOC exceeds the deterioration time value TS2 after this change, the target value TS is changed from the deterioration time value TS2 to the normal value TS1. When the state of charge SOC decreases to a value lower than the normal value TS1 after this change, the target value TS is changed from the normal value TS1 to the deterioration time value TS2. Thereafter, these changes of the target value TS (TS2→TS1, TS1→TS2) are repeated until the deterioration condition of fuel is cancelled (the deterioration level becomes lower than the predetermined value). According to this method, the frequency of use of the HV mode for the running mode is extremely low. As a result, the operating frequency and the operating time of the engine 11 considerably increase higher than in the embodiment explained above (flowchart in FIG. 2), wherefore the deteriorated fuel can be efficiently and rapidly consumed.

Similarly to the above embodiment, a certain level (normal value TS1 or higher) of the state of charge SOC is maintained in this example. Thus, the possibility of torque insufficiency or the like can be eliminated when the power of the motor 12 is required for acceleration or other purposes. Accordingly, the use of the deteriorated fuel can be effectively promoted while reducing the influences on the running performance to the minimum.

According to this embodiment, the operating frequency and the operating time of the engine are raised by changing the internal charge target value TS at the time of fuel deterioration. Alternatively, at the time of fuel deterioration, it is possible, as in the manner shown in FIG. 7, to select the EV running mode which practically uses only the motor 12 for the running drive source until the state of charge SOC decreases from full charge to the target value TS (normal value TS1), and then to select the ENG running mode which continuously and constantly uses the engine 1 for the running drive source without using the EV running mode and the HV running mode after the state of charge SOC decreases to a value lower than the target value TS (normal value TS1) and until the deterioration condition of fuel is cancelled (the deterioration level becomes lower than the predetermined value).

According to this method, the use of the deteriorated fuel can be further promoted.

### Reference Signs List

1 ... engine (internal combustion engine), 2 ... generator (motor generator), 3 ... power converting unit, 4 ... battery, 5 ... control unit (vehicle controller), 6 ... external charger connector, 7 ... fuel pump, 8 ... fuel tank, 9 ... power split mechanism, 10 ... drive wheel, 11 ... plug-in hybrid vehicle, 12 ... motor (motor generator), 13 ... fuel level gauge

## Claims

1. A hybrid vehicle, comprising:
an engine functioning as a running drive source;
a generator driven by the engine;
a battery charged by both a power source or a power generating device located outside the vehicle and the generator;
a motor functioning as a running drive source and receiving power supply from the battery; and
a vehicle controller which controls the engine, the generator, the motor and others,
wherein
the vehicle controller has deterioration detecting means which detects or estimates a deterioration level of fuel used by the engine, state of charge detecting means which detects a state of charge of the battery, and internal charge target value setting means which sets an internal charge target value for charge by the generator or others in correspondence with the state of charge, and
the internal charge target value setting means sets the internal charge target value to a normal value at the time of fuel non-deterioration when the deterioration level is lower than a predetermined value, and changes the internal charge target value to a deterioration time value higher than the normal value at the time of fuel deterioration when the deterioration level is the predetermined value or higher.

2. A hybrid vehicle, comprising:
an engine functioning as a running drive source;
a generator driven by the engine;
a battery charged by both a power source or a power generating device located outside the vehicle and the generator;
a motor functioning as a running drive source and receiving power supply from the battery; and
a vehicle controller which controls the engine, the generator, the motor and others,
wherein
the vehicle controller has deterioration detecting means which detects or estimates a deterioration level of fuel used by the engine, state of charge detecting means which detects a state of charge of the battery, and internal charge target value setting means which sets an internal charge target value for charge by the generator or others in correspondence with the state of charge,
in the period until the state of charge decreases from full charge to the target value, only the motor is practically used for the running drive source,
in the period after the state of charge decreases to a value lower than the target value, the engine is continuously or intermittently used for the running drive source while charging the battery by using the generator actuated by the engine so that the state of charge falls within the target value, and
the internal charge target value setting means sets the target value to a normal value at the time of fuel non-deterioration when the deterioration level is lower than a predetermined value, and sets the target value to a deterioration time value higher than the normal value at the time of fuel deterioration when the deterioration level is the predetermined value or higher.

3. A hybrid vehicle, comprising:
an engine functioning as a running drive source;
a generator driven by the engine;
a battery charged by both a power source or a power generating device located outside the vehicle and the generator;
a motor functioning as a running drive source and receiving power supply from the battery;
a power split mechanism which splits the power of the engine into a power for running and a power for actuation of the generator, and transmits the powers of the engine and the motor to a wheel at an arbitrary distribution ratio; and
a vehicle controller which controls the engine, the generator, the motor, the power split mechanism and others,
wherein
the vehicle controller has deterioration detecting means which detects or estimates a deterioration level of fuel used by the engine, state of charge detecting means which detects a state of charge of the battery, and internal charge target value setting means which sets an internal charge target value for charge by the generator or others in correspondence with the state of charge,
in the period until the state of charge decreases from full charge to the target value, an EV running mode which practically uses only the motor for the running drive source is selected,
in the period after the state of charge decreases to a value lower than the target value, an ENG running mode which continuously uses the engine for the running drive source and an HV running mode which intermittently uses the engine and also uses the motor for the running drive source are selected so that the state of charge falls within the target value, and
the internal charge target value setting means sets the target value to a normal value at the time of fuel non-deterioration when the deterioration level is lower than a predetermined value, and sets the target value to a deterioration time value higher than the normal value at the time of fuel deterioration when the deterioration level is the predetermined value or higher.

4. The hybrid vehicle according to any one of claims 1 through 3, wherein the internal charge target value setting means changes the internal charge target value from the deterioration time value to the normal value when the state of charge exceeds the deterioration time value at the time of the fuel deterioration, and then changes the internal charge target value from the normal value to the deterioration time value when the state of charge decreases to a value lower than the normal value, thereafter repeating the changes of the target value until the deterioration condition of fuel is cancelled.

5. A hybrid vehicle, comprising:
an engine functioning as a running drive source;
a generator driven by the engine;
a battery charged by both a power source or a power generating device located outside the vehicle and the generator;
a motor functioning as a running drive source and receiving power supply from the battery; and
a vehicle controller which controls the engine, the generator, the motor and others,
wherein
the vehicle controller has deterioration detecting means which detects or estimates a deterioration level of fuel used by the engine, state of charge detecting means which detects a state of charge of the battery, and internal charge target value setting means which sets an internal charge target value for charge by the generator or others in correspondence with the state of charge,
in the period until the state of charge decreases from full charge to the internal charge target value at the time of fuel deterioration when the deterioration level is a predetermined value or higher, only the motor is practically used for the running drive source, and
in the period after the state of charge decreases to a value lower than the internal charge target value at the time of the fuel deterioration, the engine is continuously used for the running drive source until the deterioration level becomes lower than the predetermined value.

6. The hybrid vehicle according to any one of claims 1 through 5, wherein:
the vehicle controller has external charge upper limit value setting means which sets an external charge upper limit value referred to when the battery is charged by a power source or a power generating device located outside the vehicle; and
the external charge target value setting means sets the external charge upper limit value to a normal upper limit value at the time of the fuel non-deterioration, and changes the external charge upper limit value to a deterioration time upper limit value lower than the normal upper limit value at the time of the fuel deterioration.

7. The hybrid vehicle according to claim 6, wherein surplus power is supplied to a battery, power equipment or others located outside the vehicle when the state of charge exceeds the deterioration time upper limit value under the condition of the fuel deterioration.

## Amended claims

### Amended claims under Art. 19.1 PCT

**1.** (amended)
A hybrid vehicle, comprising:
an engine functioning as a running drive source;
a generator driven by the engine;
a battery charged by both a power source or a power generating device located outside the vehicle and the generator;
a motor functioning as a running drive source and receiving power supply from the battery; and
a vehicle controller which controls the engine, the generator, and the motor,
wherein
the vehicle controller has deterioration detecting means which detects or estimates a deterioration level of fuel used by the engine, state of charge detecting means which detects a state of charge of the battery, and internal charge target value setting means which sets an internal charge target value for charge by the generator in correspondence with the state of charge,
the internal charge target value setting means sets the internal charge target value to a normal value at the time of fuel non-deterioration when the deterioration level is lower than a predetermined value, and changes the internal charge target value to a deterioration time value higher than the normal value at the time of fuel deterioration when the deterioration level is the predetermined value or higher, and
the internal charge target value setting means changes the internal charge target value from the deterioration time value to the normal value when the state of charge exceeds the deterioration time value at the time of the fuel deterioration, and then changes the internal charge target value from the normal value to the deterioration time value when the state of charge decreases to a value lower than the normal value, thereafter repeating the changes of the target value until the deterioration condition of fuel is cancelled.

**2.** (amended) A hybrid vehicle, comprising:
an engine functioning as a running drive source;
a generator driven by the engine;
a battery charged by both a power source or a power generating device located outside the vehicle and the generator;
a motor functioning as a running drive source and receiving power supply from the battery; and
a vehicle controller which controls the engine, the generator, and the motor,
wherein
the vehicle controller has deterioration detecting means which detects or estimates a deterioration level of fuel used by the engine, state of charge detecting means which detects a state of charge of the battery, and internal charge target value setting means which sets an internal charge target value for charge by the generator in correspondence with the state of charge,
in the period until the state of charge decreases from full charge to the target value, only the motor is practically used for the running drive source,
in the period after the state of charge decreases to a value lower than the target value, the engine is continuously or intermittently used for the running drive source while charging the battery by using the generator actuated by the engine so that the state of charge falls within the target value,
the internal charge target value setting means sets the target value to a normal value at the time of fuel non-deterioration when the deterioration level is lower than a predetermined value, and sets the target value to a deterioration time value higher than the normal value at the time of fuel deterioration when the deterioration level is the predetermined value or higher, and
the internal charge target value setting means changes the internal charge target value from the deterioration time value to the normal value when the state of charge exceeds the deterioration time value at the time of the fuel deterioration, and then changes the internal charge target value from the normal value to the deterioration time value when the state of charge decreases to a value lower than the normal value, thereafter repeating the changes of the target value until the deterioration condition of fuel is cancelled.

**3.** (amended) A hybrid vehicle, comprising:
an engine functioning as a running drive source;
a generator driven by the engine;
a battery charged by both a power source or a power generating device located outside the vehicle and the generator;
a motor functioning as a running drive source and receiving power supply from the battery;
a power split mechanism which splits the power of the engine into a power for running and a power for actuation of the generator, and transmits the powers of the engine and the motor to a wheel at an arbitrary distribution ratio; and
a vehicle controller which controls the engine, the generator, the motor, the power split mechanism and others,
wherein
the vehicle controller has deterioration detecting means which detects or estimates a deterioration level of fuel used by the engine, state of charge detecting means which detects a state of charge of the battery, and internal charge target value setting means which sets an internal charge target value for charge by the generator or others in correspondence with the state of charge,
in the period until the state of charge decreases from full charge to the target value, an EV running mode which practically uses only the motor for the running drive source is selected,
in the period after the state of charge decreases to a value lower than the target value, an ENG running mode which continuously uses the engine for the running drive source and an HV running mode which intermittently uses the engine and also uses the motor for the running drive source are selected so that the state of charge falls within the target value,
the internal charge target value setting means sets the target value to a normal value at the time of fuel non-deterioration when the deterioration level is lower than a predetermined value, and sets the target value to a deterioration time value higher than the normal value at the time of fuel deterioration when the deterioration level is the predetermined value or higher, and
the internal charge target value setting means changes the internal charge target value from the deterioration time value to the normal value when the state of charge exceeds the deterioration time value at the time of the fuel deterioration, and then changes the internal charge target value from the normal value to the deterioration time value when the state of charge decreases to a value lower than the normal value, thereafter repeating the changes of the target value until the deterioration condition of fuel is cancelled.

**4.** (deleted)

**5.** (amended) A hybrid vehicle, comprising:
an engine functioning as a running drive source;
a generator driven by the engine;
a battery charged by both a power source or a power generating device located outside the vehicle and the generator;
a motor functioning as a running drive source and receiving power supply from the battery; and
a vehicle controller which controls the engine, the generator, and the motor,
wherein
the vehicle controller has deterioration detecting means which detects or estimates a deterioration level of fuel used by the engine, state of charge detecting means which detects a state of charge of the battery, and internal charge target value setting means which sets an internal charge target value for charge by the generator in correspondence with the state of charge,
in the period until the state of charge decreases from full charge to the internal charge target value at the time of fuel deterioration when the deterioration level is a predetermined value or higher, only the motor is practically used for the running drive source, and
in the period after the state of charge decreases to a value lower than the internal charge target value at the time of the fuel deterioration, the engine is continuously used for the running drive source until the deterioration level becomes lower than the predetermined value.

**6.** (amended) The hybrid vehicle according to any one of claims 1 through 3 and 5, wherein:
the vehicle controller has external charge upper limit value setting means which sets an external charge upper limit value referred to when the battery is charged by a power source or a power generating device located outside the vehicle; and
the external charge upper limit value setting means sets the external charge upper limit value to a normal upper limit value at the time of the fuel non-deterioration, and changes the external charge upper limit value to a deterioration time upper limit value lower than the normal upper limit value at the time of the fuel deterioration.

**7.** (amended) The hybrid vehicle according to any one of claims 1 through 3 and 5 and 6, further comprising:
charging means which charges a power source disposed outside the vehicle,
wherein
the vehicle controller has means which controls the start and end of charge for the power source outside the vehicle, and
charge for the power source outside the vehicle from the battery is started when the fuel deterioration is detected by the deterioration detecting means under the condition that the internal charge target value exceeds the state of charge and that the charging means connects with the power source outside the vehicle.
